# EUROPÄISCHE PATENTSCHRIFT

(11) **EP 1 623 936 B1**
(45) Veröffentlichungstag und Bekanntmachung des Hinweises auf die Patenterteilung: **13.01.2010**
(21) Anmeldenummer: 05010257.3
(22) Anmeldetag: 11.05.2005
(51) Int. Cl.: B65D 90/08, B62B 1/00, B62B 3/00

(54) **Behälter, insbesondere Isolierbehälter**
Container, in particular an insulated container
Conteneur, notamment un conteneur isolant

(30) Priorität: 11.05.2004 DE 202004007736 U
(43) Veröffentlichungstag der Anmeldung: 08.02.2006
(73) Patentinhaber: GEBHARDT Transport- und Lagersysteme GmbH, 93413 Cham (DE)
(72) Erfinder: Artinger, Manfred, 94350 Auerbach (DE); Hausladen, Sebastian, 93428 Grafenkirchen (DE)
(74) Vertreter: Eder, Christian

(56) Entgegenhaltungen:
- EP-A- 0 029 229
- DE-A1- 2 927 587
- DE-A1- 4 331 835
- DE-A1- 19 900 548
- US-A- 3 716 259
- US-A- 5 655 595

## Beschreibung

Die Erfindung betrifft einen Behälter, insbesondere einen Isolierbehälter, mit den Merkmalen des Oberbegriffs des Schutzanspruchs 1.

Isolierbehälter, wie sie im Großhandel für den Transport von gefrorenen oder gekühlten Lebensmitteln verwendet werden, bestehen üblicherweise aus einem Korpus, in welchen eine Kunststoffwanne eingesetzt wird, wobei der Zwischenraum zwischen den Wandungen des Korpus und der Kunststoffwanne mit einem isolierenden Medium, beispielsweise einem Kunststoffschaum, ausgefüllt ist.

Der Korpus besteht bei bekannten Kühlbehältern aus einem Rahmen, der beispielsweise aus Winkelprofilteilen zusammengesetzt ist, wobei mit den Winkelprofilteilen Seitenplatten aus einem Metallblech oder aus Kunststoff verbunden sind.

Zur Herstellung eines Isolierbehälters mit Kunststoffwandungen ist es bekannt, zunächst den Rahmen aus Winkelprofilteilen aus Metall herzustellen und in diesen Rahmen Kunststoffplatten einzusetzen, welche die Außenwandungen des Korpus bilden. Die einzelnen Kunststoffwandungen sind in ihren Eckbereichen über Kunststoff-Winkelprofile verbunden, deren Schenkel U-förmig ausgebildet sind und einen Winkel von ca. 90° einschließen. Zur Montage werden die Kunststoffplatten lediglich in die Kunststoff-Winkelprofile eingeschoben und innerhalb des Rahmens aus Metall-Winkelprofilen positioniert. Anschließend wird die einseitig offene Wanne in diesen Korpus eingeschoben und der Zwischenraum zwischen den Korpuswandungen und der Wanne mit Kunststoff ausgeschäumt. Da die Wandungen mit ihren Seitenbereichen lediglich in die Kunststoff-Winkelprofile eingeschoben sind, müssen die Übergänge zwischen den Wandungen und den Kunststoff-Winkelprofilen zusätzlich abgedichtet werden, beispielsweise durch das Aufbringen eines Klebebands, da ansonsten Kunststoffschaum während des Ausschäumvorgangs nach außen austreten würde.

Nachteilig bei diesem Isolierbehälter ist zum einen der relativ aufwändige Herstellungsprozess, sowie die Instabilität des Korpus während der Montage des Behälters. Zudem besteht die Gefahr, dass bei einem Beschädigen des Rahmens aus den Metall-Profilteilen die Schenkel des Profils von den Seitenwandungen des Korpus abgehoben werden, beispielsweise wenn die Kanten des Behälters durch Kollisionen mit anderen Behältern oder Transportfahrzeugen beschädigt, insbesondere leicht geknickt werden. Da die Schenkel der Metall-Winkelprofilteile des Rahmens nicht mit den Korpuswandungen verbunden sind, können sich die Schenkel leicht nach außen biegen, wodurch eine Verletzungsgefahr für Personen besteht, die mit dem Behälter hantieren. Zudem besteht hierdurch die Gefahr, dass der Behälter undicht wird und beispielsweise Feuchtigkeit in das Behälterinnere oder in die an die Korpusinnenwandung angrenzende Isolierung eindringt. Die Montage eines derartigen Behälters wird insbesondere bei der Verwendung von Kunststoffplatten schwierig, welche die Aussenwandungen des Korpus bilden, da diese Kunststoffplatten relativ dünn und instabil sind. Sie können beispielsweise eine Stärke von lediglich 2 mm aufweisen.

Aus der US 3,716,259 ist ein Behälter mit Eckverbinder bekannt, dessen Seitenwände zwischen parallelen Schenkeln von Profilen angeordnet und in den Behälterecken miteinander verklebt sind.

Ausgehend von diesem Stand der Technik liegt der Erfindung daher die Aufgabe zugrunde, einen Behälter, insbesondere Isolierbehälter, zu schaffen, welcher auf einfache Weise und kostengünstig herstellbar ist und der sowohl bei der Herstellung, als auch während des Gebrauchs, eine ausreichende Stabilität aufweist.

Die Erfindung löst diese Aufgabe mit den Merkmalen des Schutzanspruchs 1.

Die Erfindung geht von der Erkenntnis aus, dass die fünf miteinander zu verbindenden Seitenwandungen des Korpus des Behälters auf einfache Weise und mit hoher Stabilität durch die Verwendung eines äußeren Winkelprofils und eines inneren Winkelprofils miteinander verbunden werden können. Auf diese Weise entsteht ein Korpus, der bereits nach dessen Montage eine sehr gute Stabilität aufweist, auch wenn die aus relativ dünnen Platten bestehenden Seitenwandungen für sich genommen eine nur geringe Stabilität besitzen. Zudem können die Seitenplatten in den Randbereichen durch jeweils ein inneres und ein äußeres Winkelprofil dicht miteinander verbunden werden. Soll der Behälter als Kühlbehälter ausgebildet werden und hierzu eine Innenwanne in den Korpus eingesetzt werden, so kann das Ausschäumen des Zwischenraums zwischen der Innenwanne und dem Korpus erfolgen, ohne dass weitere Maßnahmen für die Abdichtung des Korpus erforderlich wären.

Die Erfindung sieht vor, dass für wenigstens eine Seitenwandung deren äußeres Winkelprofil mit seinem zugehörigen inneren Winkelprofil in einem Kehlbereich zu einem Doppelprofil fest verbunden ist.

Darduch lässt sich die Montage vorteilhaft weiter vereinfachen und zugleich die Stabilität erhöhen.

Dabei ist vorgesehen, dass die Schenkel des inneren Winkelprofils des Doppelprofils federnd in Richtung auf die Schenkel des zugehörigen äußeren Winkelprofils ausgebildet sind. Das bedeutet, dass die inneren Schenkel gegen eine vorgebbare Federkraft so in Richtung auf die gegenüber liegende Innenseite der Schenkel des äußeren Winkelprofils drücken, dass eine zwischen die beiden Schenkel eingesetzte Behälterwand in einem wählbaren Maß geklemmt wird. Insbesondere wird eine solche federnde Wirkung dort bevorzugt, wo der Behälter zwischen seiner Wandung und einer in diesen Behälter eingesetzten Wanne mit Isoliermaterial ausgeschäumt wird. Durch die Klemmwirkung wird sichergestellt, dass die inneren Schenkel des Doppelprofils so gegen die jeweils einzusetzende Wandung drückt, dass eine abdichtende Wirkung erzielt wird. Insbesondere bedeutet dies, dass keinerlei Ausschäumungsmaterial entlang der Innenseite der Behälterwandung unter den Schenkeln des inneren Winkelprofils hindurch gelangen kann in den Bereich, in dem die beiden Winkelprofile miteinander befestigt sind. Diese federnde Wirkung erspart also zusätzliche Abdichtarbeit und erleichtert dadurch die Herstellung des Behälters.

Nach der bevorzugten Ausführungsform der Erfindung sind die vier äußeren Winkelprofile an wenigstens einer Seite des Behälters, vorzugsweise an zwei einander gegenüberliegenden Seiten, in den Eckbereichen zu einem Profilrahmen verbunden. Dabei kann ein als Boden dienender Profilrahmen während der Montage des Korpus des Behälters mit allen Winkelprofilen und der Bodenplatte vorgefertigt werden. In das vorgefertigte Bodenteil könnten dann nacheinander die Seitenwandungen eingesteckt und untereinander sowie mit dem Bodenteil verbunden werden. Das Deckenteil kann, ebenso wie das Bodenteil, vorgefertigt werden und einen Profilrahmen umfassen.

Muss eine Wanne in den Korpus eingebaut werden, so kann diese nach der Vormontage des Bodenteils und der drei Seitenteile von oben eingeschoben und anschließend das ebenfalls vorgefertigte Deckelteil aufgesetzt werden. Hierdurch ergibt sich eine einfache, schnelle und kostengünstige Montage des Behälters.

Nach einer Ausführungsform der Erfindung können die Eckbereiche jedes äußeren Winkelprofils des Profilrahmens zumindest für die Breite des vertikal zu dem Profilrahmen stehenden äußeren Winkelprofils zu dessen Aufnahme in diesem Eckbereich nach außen gekröpft sein. Hierdurch ist es möglich, die Schenkel des äußeren vertikalen Winkelprofils fluchtend zu dem Schenkel des äußeren horizontalen Winkelprofils im Bereich zwischen den gekröpften Eckbereichen des horizontalen Winkelprofils zu positionieren.

Das vertikale äußere Winkelprofil kann in demjenigen Bereich, in dem eine Überlappung mit dem gekröpften Bereich des Profilrahmens besteht, fest mit dem Profilrahmen verbunden sein, beispielsweise durch Schrauben oder Vernieten.

Nach einer anderen Ausführungsform der Erfindung kann der Profilrahmen anstelle eines nach außen Kröpfens der äußeren Bereiche der vier äußeren Winkelprofile auch dadurch hergestellt werden, dass zunächst separat hergestellte Eckverbinderteile mit den vier äußeren Winkelprofilen verbunden werden. Die Eckverbinderteile umfassen dabei rechtwinklig zueinander stehende Schenkel, die ihrerseits jeweils als Winkelprofil ausgebildet sind. Diese Schenkel greifen außen an den äußeren Winkelprofilen an und sind mit diesen überlappend verbunden, beispielsweise durch Nieten oder Verschweißen.

Die Seitenplatten können durch Nieten oder Verschrauben mit den einander zugewandten Schenkeln der jeweils einander zugeordneten äußeren und inneren Winkelprofile verbunden sein. Das Verbinden kann beispielsweise durch Nieten oder Verschrauben erfolgen. Die Nieten oder Schrauben können dabei sowohl die betreffenden Winkelprofilschenkel als auch die dazwischen gehaltene Seitenplatte durchgreifen.

Hierdurch ergibt sich der Vorteil einer sehr guten Stabilität des Korpus und gleichzeitig kann auf diese Weise eine ausreichend dichte Verbindung zwischen den Seitenplatten und den Winkelprofilen gewährleistet werden.

Nach einer Ausführungsform der Erfindung können ein, oder beide Schenkel der inneren Winkelprofile in deren äußeren Endbereichen mit einem vorbestimmten Winkel nach außen gebogen sein. Hierdurch können sowohl das innere, als auch das äußere Winkelprofil an einer Seitenplatte befestigt werden und anschließend die an dieser Kante mit der so vorbereiteten Seitenplatte zu verbindende weitere Seitenplatte auf einfache Weise zwischen die Schenkel des äußeren und inneren Winkelprofils eingeschoben werden.

Die zueinander parallel verlaufenden Bereiche der Schenkel des inneren und äußeren Winkelprofils können dabei so beabstandet sein, dass die Dicke der einzuschiebenden Seitenplatte im wesentlichen dem Abstand der Innenwandungen der Winkelschenkel entspricht. Hierdurch entsteht eine stabile und ausreichend dichte Verbindung.

Nach einer weiteren Ausführungsform der Erfindung können an einem Profilrahmen Behälterfüße oder Behälterrollen und/oder Gelenkteile zur Halterung einer Behältertüre oder -klappe angeordnet sein. Durch die ausgezeichnete Stabilität des Profilrahmens bzw. der betreffenden gesamten Behälterwandung (einschließlich Profilrahmen, Innenwinkel und Seitenplatte) ergibt sich eine entsprechend stabile Halterungsmöglichkeit für diese Teile.

Im Prinzip besteht ein solches Doppelprofil aus dem äußeren Winkelprofil und dem innen liegenden zugehörigen inneren Winkelprofil. Das äußere Winkelprofil hat dabei vorzugsweise einen rechtwinkligen Querschnitt, während das innere Winkelprofil einen Querschnitt aufweist, der zumindest im Bereich seiner Befestigung mit dem äußeren Winkelprofil einen Querschnittswinkel < 90° aufweist. Dadurch ist gewährleistet, dass das innere Winkelprofil mit der Außenseite seines Scheitelbereichs an der Innenseite des Scheitelbereichs des äußeren Winkelprofils anliegen kann, um dort befestigt zu sein. Die Schenkel des inneren Winkelprofils des Doppelprofils erstrecken sich also von dem Scheitelbereich aus gesehen um ein Maß weg von den Innenseiten des äußeren Winkelprofils, um dazu einen gewissen Abstand zu bilden. Im weiteren Verlauf der Schenkel des inneren Winkelprofils können diese sich dann beispielsweise parallel zu den Schenkeln des äußeren Winkelprofils ausrichten. In diesem Fall entsteht zwischen äußerem und innerem Winkelprofil, die zu einem Doppelprofil ausgebildet sind, jeweils ein Spalt zwischen den einander gegenüber liegenden Schenkeln, in den die Behälterwandung eingesetzt werden kann.

Ein solches fertig vorfabriziertes Doppelprofil erleichtert den Zusammenbau des Behälters, da inneres und äußeres Winkelprofil bereits relativ zueinander fixiert sind.

Selbstverständlich sind die bereits beschriebenen zusätzlichen Befestigungsmöglichkeiten auch im Fall der Verwendung des Doppelprofils gegeben, d.h. zusätzliche Niet- oder Schraubverbindungen erlauben weiterhin die ergänzende stabilisierende Befestigung der zwischen die Flügel des Doppelprofils jeweils eingeschobenen Behälterwände.

Vorteilhafterweise wird das Doppelprofil aus dem äußeren und inneren Winkelprofil dadurch hergestellt, dass beide Profile im Kehlbereich über eine Schweiß-, Niet-, Schraub- oder Klebeverbindung miteinander fest verbunden sind. Diese Verbindungen sind einfach und kostengünstig herzustellen und minimieren gegebenenfalls den Aufwand für zusätzliche Befestigungen der Behälterwände an den Doppelprofilen.

Besonders vorteilhaft ist das Doppelprofil dann ausgebildet, wenn die Schenkel des inneren Winkelprofils eine in Richtung auf die Schenkel des zugehörigen äußeren Winkelprofils gerichtete Dichtlippe aufweisen. In diesem Fall wird die Dichtwirkung ganz gezielt über eine vorgebbare Berührungslinie erzielt, die gegebenenfalls mit besonderen Dichtmitteln versehen sein kann. In Kombination mit der vorbeschriebenen federnden Wirkung im Bereich dieser Dichtlippe ergibt sich eine besonders gute Dichtwirkung.

Weitere Ausführungsformen der Erfindung ergeben sich aus den Unteransprüchen. Die Erfindung wird nachfolgend anhand eines in der Zeichnung dargestellten Ausführungsbeispiels näher erläutert. In der Zeichnung zeigen:
- Fig. 1: eine perspektivische, schematische Darstellung einer Aus- führungsform eines erfindungsgemäßen Behälters in Form eines Rollbehälters;
- Fig. 2: eine vergrößerte, ausschnittsweise Darstellung des Boden- teils des Behälters in Fig. 1;
- Fig. 3: eine perspektivische, ausschnittsweise Innenansicht des rechten hinteren Eckbereichs der Darstellung in Fig. 2;
- Fig. 4: eine perspektivische Ansicht eines hinteren Eckbereichs des Bodenteils des Behälters in Fig. 1 von außen;
- Fig. 5: eine schematische Seitenansicht eines Doppelprofils und
- Fig. 6: eine perspektivische Ansicht eines Doppelprofils.

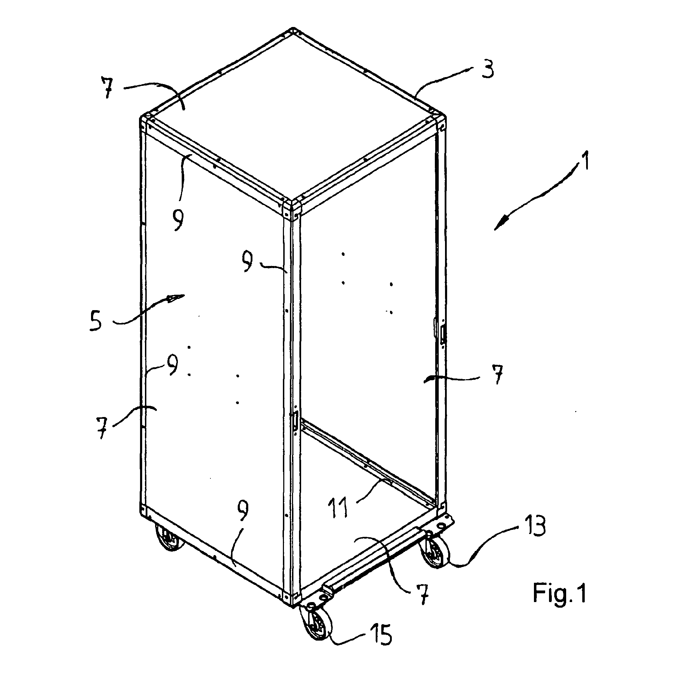

Der in Fig. 1 dargestellte Behälter 1 umfasst einen Korpus 3 aus fünf rechtwinklig zueinander stehenden Seitenwandungen 5, wobei in der vorliegend gewählten Nomenklatur auch die Bodenwandung und Deckelwandung als Seitenwandung bezeichnet wird.

Jede Seitenwandung 5 umfasst eine rechteckige Seitenplatte 7, die mittels jeweils eines äußeren Winkelprofils 9 und mittels eines inneren Winkelprofils 11 mit der Seitenplatte 7 einer angrenzenden Seitenwandung 5 verbunden ist.

Am Bodenteil des in Fig. 1 dargestellten Behälters 1 sind im vorderen Bereich, das heißt an der offenen vorderen Seite des Behälters 1, Schwenkrollen 13 und am gegenüber liegenden hinteren Ende feststehende Rollen 15 angeordnet.

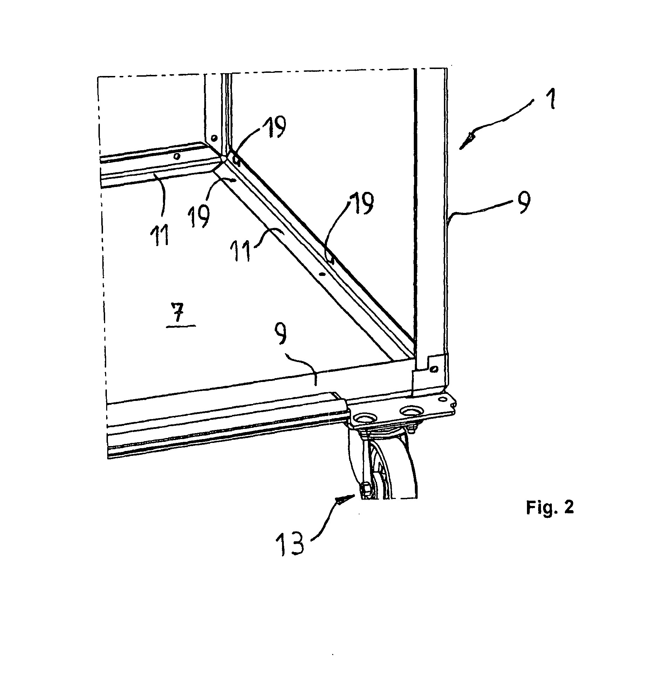

Die Verbindung der Seitenplatten 7 mittels der äußeren und inneren Winkelprofile 9, 11 wird aus der vergrößerten Ansicht nach Fig. 2 deutlich. Diese Figur zeigt im wesentlichen das Bodenteil des Behälters 1, wobei deutlich erkennbar ist, dass auf der Seitenplatte 7 des Bodenteils innere Winkelprofile 11 mit der Seitenplatte 7 verbunden sind. Das Verbinden kann beispielsweise durch Vernieten der zur Bodenplatte 7 parallelen Schenkel der inneren Winkelprofile 11 erfolgen. Des Weiteren sind mit der Bodenplatte äußere Winkelprofile 9 verbunden, deren mit der Seitenplatte 7 horizontale Schenkel die Seitenplatte 7 an der Unterseite umgreifen. Das Verbinden kann ebenfalls durch Vernieten oder dergleichen erfolgen. Um eine Anpressung der einander gegenüber stehenden Schenkel der inneren Winkelprofile 11 und der äußeren Winkelprofile 9 zu erreichen, können die Nieten oder entsprechende Befestigungselemente beide Schenkel der Winkelprofile 9, 11 und die dazwischen liegende Seitenplatte 7 durchgreifen. Hierdurch wird eine sehr stabile und zudem dichte Verbindung erreicht.

Wie in Fig. 2 dargestellt, können die inneren Winkelprofile 11 bzw. deren in den Ecken aneinander grenzende Schenkel jeweils auf Gehrung gearbeitet sein.

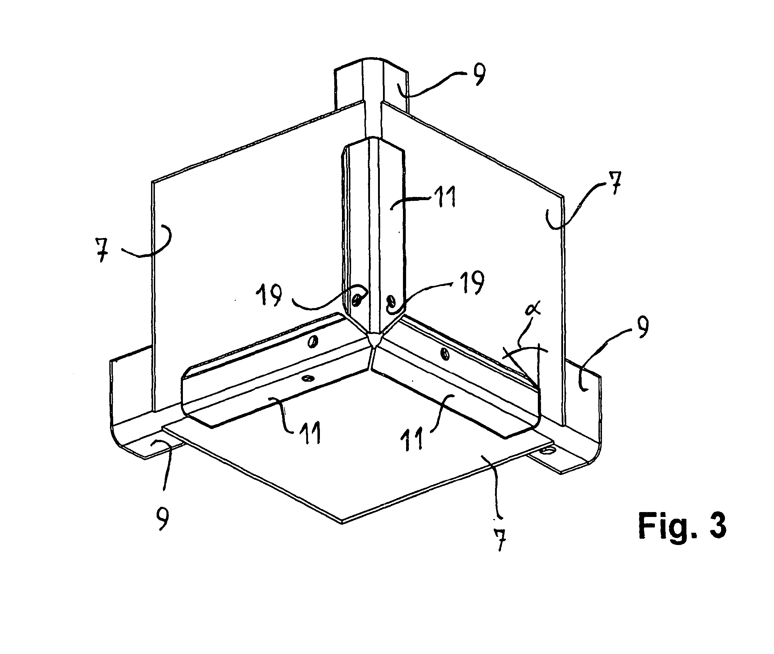

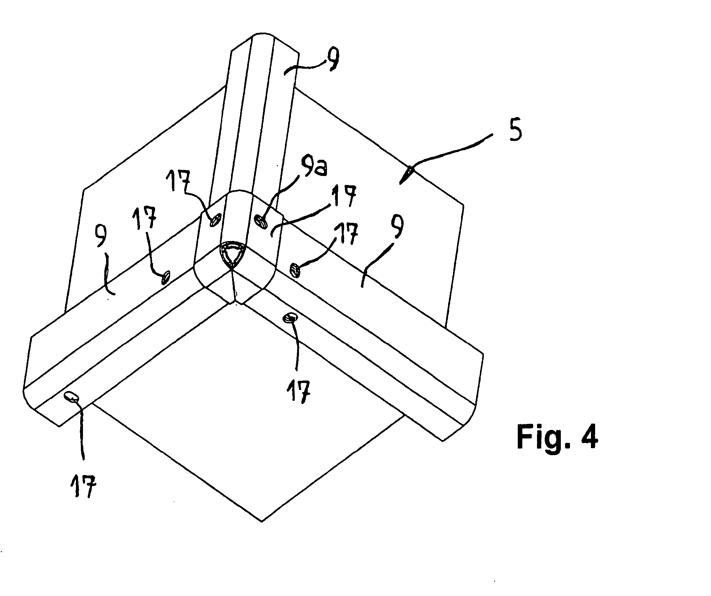

Eine Innenansicht der in Fig. 2 rechts hinten dargestellten Ecke ist nochmals vergrößert in Fig. 3 perspektivisch dargestellt. In Fig. 3 ist auch deutlich erkennbar, dass jeweils ein Endbereich eines Schenkels der inneren Winkelprofile 11 um einen bestimmten Winkel α gegenüber der durch die Seitenplatte 7 definierten Ebene in der Richtung von der Innenseite der Seitenplatte 7 weg gebogen ist. Hierdurch ergibt sich folgender Vorteil: bei der Montage des Behälters 1 kann beispielsweise zunächst das Bodenteil vorgefertigt werden. Hierzu werden vorzugsweise zunächst die vier äußeren Winkelprofile 9 zu einem Profilrahmen miteinander verbunden. Ein Eckbereich dieses Profilrahmens ist in Fig. 4 dargestellt. Dabei zeigt die Darstellung in Fig. 4, dass jeweils die äußeren Bereiche der Schenkel der äußeren Winkelprofile 9 derart nach außen gekröpft sind, dass die Innenseite des nach außen gekröpften Teilbereichs 9a mit der Außenseite des übrigen Schenkels fluchtet. Dies ist zumindest für denjenigen Schenkel des äußeren Winkelprofils 9 erforderlich, der im jeweiligen Eckbereich mit einem hierzu vertikalen äußeren Winkelprofil 9 einer vertikalen Seitenwandung 5 verbunden werden soll. Durch den nach außen gekröpften Teilbereich 9a des äußeren Winkelprofils 9 ist es möglich, das Ende des hierzu senkrecht stehenden Winkelprofils einer benachbarten Seitenwandung so mit dem Profilrahmen zu verbinden, dass die Wandung der Schenkel des vertikalen äußeren Winkelprofils 9 mit den Wandungen der Schenkel der horizontal verlaufenden Winkelprofile 9 in deren nicht nach außen gekröpfte Teilbereiche fluchten.

Wie in Fig. 4 dargestellt, können in den nach außen gekröpften Bereichen 9a der äußeren Winkelprofile 9 Bohrungen 17 für das Verbinden der äußeren Winkelprofile 9 des Profilrahmens des Bodenteils mit den vertikal verlaufenden äußeren Winkelprofilen zu ermöglichen. Fluchtend zu den Bohrungen 17 kann auch das zu dem jeweiligen vertikal verlaufenden äußeren Winkelprofil 9 korrespondierende innere Winkelprofil 11 Bohrungen 19 aufweisen, so dass entsprechende Nieten oder Schrauben beide, einander gegenüber liegende Schenkel der inneren und äußeren Winkelprofile 11, 9 durchgreifen. Die Bohrungen 17, 19 können sowohl in Bereichen positioniert sein, in denen auch noch die Seitenplatte 7 vorhanden ist, als auch außerhalb derartiger Bereiche. Im erstgenannten Fall kann dabei selbstverständlich die Seitenplatte 7 eine mit den Bohrungen 17, 19 fluchtende Bohrung aufweisen.

Aus den Figuren 1 bis 4 ist des Weiteren ersichtlich, dass die inneren und äußeren Winkelprofile 11, 9 auch außerhalb der nach außen gekröpften Bereiche der äußeren Winkelprofile 9 Bohrungen 17, 19 aufweisen können, um die jeweiligen Schenkel der inneren bzw. äußeren Winkelprofile 11, 9 mit den jeweiligen Seitenplatten 7 zu verbinden.

Durch den jeweils nach innen gebogenen Endbereich des betreffenden Schenkels der inneren Winkelprofile 11 (Fig. 3) wird erreicht, dass eine Seitenplatte 7 einfach in den Zwischenraum zwischen einander zugeordneten Schenkeln eines inneren und äußeren Winkelprofils 11, 9 eingeschoben werden kann, wenn die jeweils anderen Schenkel dieser Winkelprofile 11, 9 bereits mit einer Seitenplatte 7 verbunden sind. Aus den Fig. 2 und 3 ist beispielsweise zu entnehmen, dass sich durch die hier gewählte Konfiguration der inneren Winkelprofile 11 folgende Montageweise anbietet:

Zunächst wird das Bodenteil mit seinem Profilrahmen, der aus den äußeren Winkelprofilen 9 besteht, seiner Bodenplatte 7 und den auf der Bodenplatte mit ihren jeweiligen Schenkeln angeordneten inneren Winkelprofilen 11 hergestellt. Die Bodenplatte wird dabei bereits fest mit den betreffenden Schenkeln der inneren und äußeren Winkelprofile 9, 11 verbunden. In dieses Bodenteil kann dann das in Fig. 3 dargestellte rechte Seitenteil eingesetzt werden, wobei mit diesem Seitenteil bereits die beiden vertikal verlaufenden Winkelprofile 9, 11 verbunden sind. Das Einsetzen kann in einfacher Weise dadurch erfolgen, dass die Seitenwandung 7 der vertikal verlaufenden Seitenwandung in den Zwischenraum zwischen dem vertikalen Schenkel des mit dem Boden verbundenen inneren Winkelprofils 11 und dem vertikalen Schenkel des mit dem inneren Boden verbundenen äußeren Winkelprofils 9 eingeschoben wird. Das Einschieben wird durch den nach innen abgewinkelten oberen Endbereich des inneren Winkelprofils 11 erleichtert.

Das in Fig. 3 dargestellte, vertikal verlaufende Winkelprofil 11 weist einen linken Schenkel auf, der ebenfalls wieder nach innen abgewinkelt ist. Auf diese Weise kann die hintere Seitenplatte 7, die in Fig. 3 als linke, vertikale Seitenplatte 7 dargestellt ist, einfach zwischen die vertikal verlaufenden und horizontal verlaufenden Winkelprofile bzw. die betreffenden, einander gegenüberstehenden Schenkel dieser Winkelprofile eingesetzt werden. Selbstverständlich kann vor dem Einschieben der hinteren Seitenplatte 7 auch die andere vertikale Seitenwandung in gleicher Weise montiert werden, wie dies oben für die in Fig. 3 rechts dargestellte Seitenwandung beschrieben wurde.

Wie aus den Fig. 1 und 2 ersichtlich, können die beiden Seitenwandungen 5 (beiderseits der nach vorne gerichteten Behälteröffnung) auch an den vorderen, vertikalen Endbereichen äußere Winkelprofile 9 aufweisen. Da die Vorderseite des Behälters jedoch offen bleibt, ist an diesen Endbereichen der Seitenplatten 7 kein inneres Winkelprofil 11 erforderlich. Die offene Vorderseite des Behälters 1 kann beispielsweise mittels einer nicht näher dargestellten Türe verschlossen werden.

Ist der Behälter in der vorstehend beschriebenen Weise soweit vormontiert, dass das Bodenteil mit den drei vertikalen Seitenwandungen verbunden ist, so kann die Oberseite des Behälters mit einem Deckelteil verschlossen werden, welches in gleicher Weise vormontiert werden kann, wie dies zuvor für das Bodenteil beschrieben wurde. Auch das Deckelteil kann einen Profilrahmen mit bereits vormontierter Seitenplatte und vormontierten inneren Winkelprofilen 11 aufweisen.

Soll der Behälter 1 als Kühlbehälter ausgebildet werden, so kann vor dem Aufsetzen des Deckelteils eine einseitig offene Wanne von oben in den teilweise vormontierten Behälter eingesetzt werden. Nach dem Aufsetzen und befestigen des Deckelteils kann dann der Zwischenraum zwischen den Außenwandungen der nach vorne offenen Wanne (nicht dargestellt) und den Innenwandungen des vormontierten Korpus 3 des Behälters 1 mit einem Isoliermedium ausgefüllt werden. Hierbei kann es sich um einen Kunststoffschaum handeln, der nicht nur isolierende Eigenschaften besitzt, sondern auch an den betreffenden Flächen des Korpus 3 und der Wanne haftet. Die Innenwandungen können für das Erzielen einer ausreichenden Haftung entsprechend strukturiert, vorbehandelt oder beschichtet werden. Als Beschichtung kann beispielsweise ein Vlies mit der betreffenden Oberfläche verklebt werden.

Durch die spezielle Konstruktion des Behälterkorpus 3 ergibt sich gegenüber bekannten Behältern eine sehr einfache, schnelle und kostengünstige Montage. Zudem weist dieser Behälter eine hervorragende Stabilität auf. Durch das Verbinden der äußeren und inneren Winkelprofile 9, 11 auch in den Bereichen zwischen den Ecken des Behälters ergibt sich neben einer ausgezeichneten Dichtwirkung auch eine gegenüber bekannten Behältern größere Robustheit. Selbst bei Beschädigungen der Behälterkanten, also der äußeren Winkelprofile 9 in Bereichen zwischen zwei Ecken, besteht kaum die Gefahr, dass sich die Schenkel der Winkelprofile 9 von den Außenseiten der Seitenplatten 7 abheben und hierdurch eine Verletzungsgefahr für mit dem Behälter hantierende Personen entsteht oder hierdurch der Behälter undicht wird.

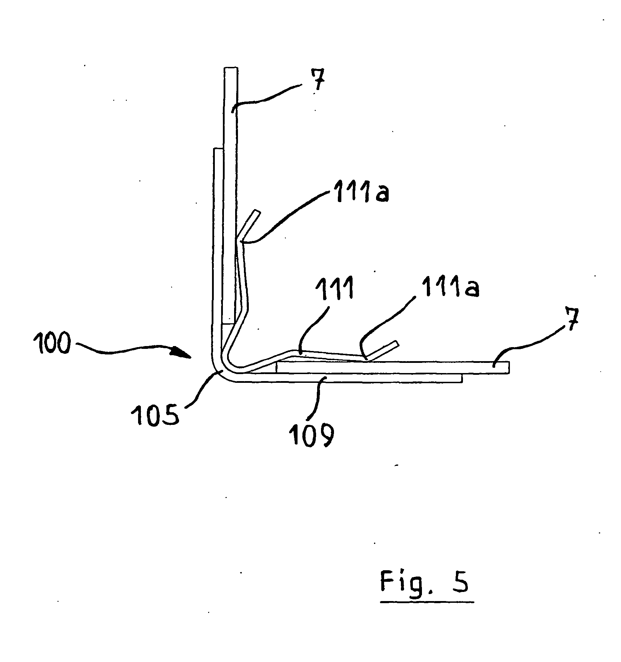

In Fig. 5 ist im Querschnitt ein Doppelprofil 100 gezeigt, welches aus einem äußeren Winkelprofil 109 und einem inneren Winkelprofil 111 zusammengesetzt ist. Das Doppelprofil 100 weist einen Kehlbereich 105 auf, in dem die Verbindung zwischen äußerem Winkelprofil 109 und innerem Winkelprofil 111 hergestellt ist.

Deutlich zu sehen ist, dass die Schenkel 111 einen Abstand zu den Schenkeln des äußeren Winkelprofils 109 bilden, um in diesem Abstand eine Behälterwand 7 aufzunehmen.

In dem Bereich 111a drücken die Schenkel des inneren Winkelprofils 111 so gegen die Innenseite der Behälterwände 7, dass diese gegen die Innenseite der Schenkel des äußeren Winkelprofils 109 gedrückt werden. Insgesamt ergibt sich dadurch einen besonders gut abdichtende Wirkung, so dass keinerlei Füllmaterial in den Bereich eindringen kann, der von dem äußeren Winkelprofil 109, dem inneren Winkelprofil 111, dem Bereich 111a und der Wandung 7 eingeschlossen ist.

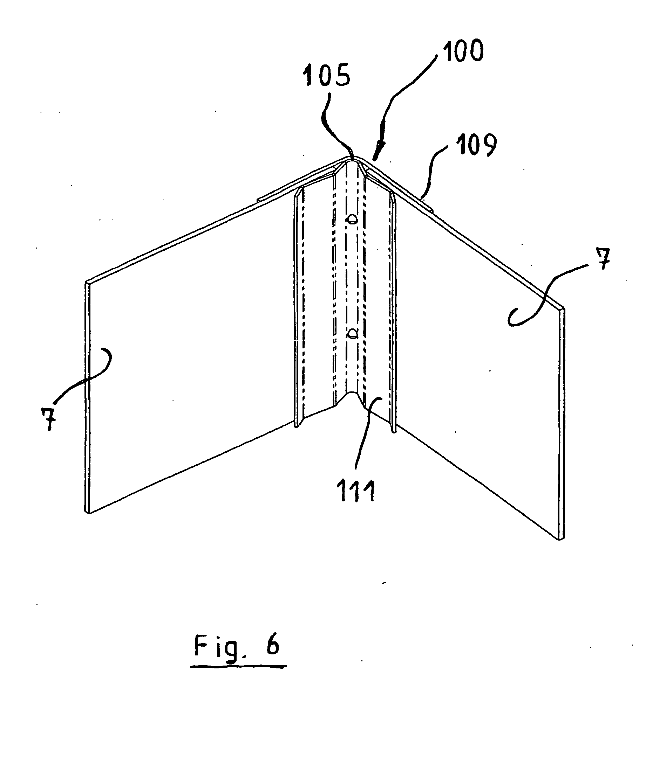

In Fig. 6 sind die Merkmale des Doppelprofils 100 in perspektivischer Ansicht gezeigt. Von dem Verbindungsbereich 105 erstrecken sich jeweils paarweise die inneren und äußeren Schenkel des inneren bzw. äußeren Winkelprofils fort, wobei sie Teile einer Wandung 7 umgreifen.

Es versteht sich von selbst, dass die Form des Doppelprofils an den Stoßstellen bzw. an den Bereichen, an denen das Doppelprofil an andere Doppelprofile grenzt (Eckbereiche des Behälters) in der entsprechenden Gestaltung der vorbeschriebenen separat ausgebildeten äußeren bzw. inneren Winkelprofile vorliegen kann. Insbesondere die gekröpfte Ausführungsform des äußeren Winkelprofils bzw. die leicht weggebogenen Endbereiche des inneren Winkelprofils können in analoger Weise auch für das Doppelprofil gewählt werden. Gleiches gilt für die Gehrung, falls diese in den Eckbereichen des Behälters gewählt werden soll.

## Patentansprüche

1. Behälter, insbesondere Isolierbehälter,
a) mit einem Korpus (3) mit wenigstens fünf, im wesentlichen rechtwinklig zueinander stehenden Seitenwandungen (5),
b) wobei jede Seitenwandung (5) eine im wesentlichen rechteckige Seitenplatte (7) umfasst, welche mittels jeweils eines äußeren Winkelprofils (9) und eines diesem äußeren Winkelprofil (9) zugeordneten inneren Winkelprofils (11) mit jeder der Seitenplatten (7) der angrenzenden Seitenwandungen (5) verbunden ist und
c) wobei dass jedes äußere Winkelprofil (9) mit den Innenseiten an den Außenseiten der zu verbindenden Seitenplatten (7) anliegt und das jeweils zugeordnete innere Winkelprofil (11) mit seinen Außenseiten an den Innenseiten der zu verbindenden Seitenplatten (7) anliegt.
**dadurch gekennzeichnet,**
d) **dass** für wenigstens eine Seitenwandung deren äußeres Winkelprofil (9) mit seinem zugehörigen inneren Winkelprofil (11) in einem Kehlbereich zu einem Doppelprofil fest verbunden ist, wobei die Schenkel des inneren Winkelprofils (11) des Doppelprofils zur Abdichtung federnd in Richtung auf die Schenkel des zugehörigen äußeren Winkelprofils (9) ausgebildet sind.

2. Behälter nach Anspruch 1, **dadurch gekennzeichnet, dass** die vier äußeren Winkelprofile (9) an wenigstens einer Seite des Behälters (1), vorzugsweise an zwei einander gegenüber liegenden Seiten, in den Eckbereichen zu einem Profilrahmen verbunden sind.

3. Behälter nach Anspruch 2, **dadurch gekennzeichnet, dass** die Eckbereiche jedes äußeren Winkelprofils (9) des Profilrahmens zumindest für die Breite des vertikal zu dem Profilrahmen stehenden äußeren Winkelprofils (9) zu dessen Aufnahme in diesen Eckbereich nach außen gekröpft sind.

4. Behälter nach Anspruch 2, **dadurch gekennzeichnet, dass** die vier äußeren Winkelprofile (9) in den Eckbereichen mittels Eckverbinderteile zu dem Profilrahmen verbunden sind, wobei die Eckverbinderteile vorzugsweise aus rechtwinkelig miteinander verbundenen Winkelprofilteilen bestehen, welche mit ihren Innenseiten jeweils mit den Außenseiten der äußeren Winkelprofile (9) überlappend verbunden sind, beispielsweise durch Nieten oder Verschweißen.

5. Behälter nach einem der vorhergehenden Ansprüche, **dadurch gekennzeichnet, dass** die Seitenplatten (7) durch Nieten oder Verschrauben mit den einander zugewandten Schenkel der einander zugeordneten äußeren und inneren Winkelprofile (9, 1 1)verbunden sind, wobei vorzugsweise mehrere Nieten oder Schrauben sowohl beide Winkelprofilschenkel als auch die dazwischen gehaltene Seitenplatte (7) durchgreifen.

6. Behälter nach einem der vorhergehenden Ansprüche, **dadurch gekennzeichnet, dass** ein, oder beide Schenkel der inneren Winkelprofile (11) in deren äußeren Endbereichen mit einem vorbestimmten Winkel (α) nach außen gebogen sind, um während der Montage das Einschieben der betreffenden Seitenplatte (7) zu erleichtern.

7. Behälter nach einem der vorhergehenden Ansprüche, **dadurch gekennzeichnet, dass** die Seitenplatten (7) im wesentlichen gasdicht, flüssigkeitsdicht, insbesondere wasserdicht, oder dicht in Bezug auf ein während eines Ausschäumprozesses viskoses Schaummedium mit den äußeren und inneren Winkelprofilen (9, 11) verbunden sind.

8. Behälter nach einem der vorhergehenden Ansprüche, **dadurch gekennzeichnet, dass** die Seitenplatten (7) aus Kunststoff bestehen.

9. Behälter nach einem der vorhergehenden Ansprüche, **dadurch gekennzeichnet, dass** die äußeren und inneren Winkelprofile (9, 11) aus Metall, vorzugsweise Stahl oder Aluminium bestehen.

10. Behälter nach einem der Ansprüche 3 bis 9, **dadurch gekennzeichnet, dass** am Profilrahmen Behälterfüße oder Behälterrollen (13, 15) und/oder Gelenkteile zur Halterung einer Behältertüre oder -klappe angeordnet sind.

11. Behälter nach einem der vorhergehenden Ansprüche, **dadurch gekennzeichnet, dass** im Behälter (1) eine einseitig offene Wanne angeordnet ist und dass der Zwischenraum zwischen den Außenwandungen der Wanne und den Innenwandungen des Korpus (3) ganz oder teilweise mit einem Medium, vorzugsweise einem Isolierschaum, ausgefüllt ist.

12. Behälter nach einem der vorigen Ansprüche, **dadurch gekennzeichnet, dass** das Doppelprofil durch eine Schweiß-, Niet-, Schraub- oder Klebeverbindung zwischen äußerem Winkelprofil (9) und zugehörigem inneren Winkelprofil (11) ausgebildet ist.

13. Behälter nach einem der vorigen Ansprüche, **dadurch gekennzeichnet, dass** die Schenkel des inneren Winkelprofils (11) eine in Richtung auf die Schenkel des zugehörigen äußeren Winkelprofils (9) gerichtete Dichtlippe aufweisen.

## Claims

1. A container, in particular an insulated container,
a) having a body (3) with at least five side walls (5) that are substantially at right angles to each other,
b) wherein each side wall (5) comprises a substantially rectangular side plate (7) which by means of a respective outer angular profiled section (9) and an inner angular profiled section (11) associated with this outer angular profiled section (9) is connected to each of the side plates (7) of the adjacent side walls (5), and
c) wherein each outer angular profiled section (9) rests with the inner sides against the outer sides of the side plates (7) that are to be connected, and the respectively associated inner angular profiled section (11) rests with its outer sides against the inner sides of the side plates (7) that are to be connected,
**characterised**
d) **in that** for at least one side wall the outer angular profiled section (9) thereof is fixedly connected with its associated inner angular profiled section (11) in a groove region to form a double profiled section, with the legs of the inner angular profiled section (11) of the double profiled section being formed for sealing in a resilient manner in the direction of the legs of the associated outer angular profiled section (9).

2. A container according to claim 1, **characterised in that** the four outer angular profiled sections (9) are connected on at least one side of the container (1), preferably on two opposing sides, in the corner regions to form a profiled frame.

3. A container according to claim 2, **characterised in that** the corner regions of each outer angular profiled section (9) of the profiled frame are outwardly bent at right angles at least for the width of the outer angular profiled section (9) standing vertically to the profiled frame for the reception thereof in this corner region.

4. A container according to claim 2, **characterised in that** the four outer angular profiled sections (9) are connected in the corner regions by means of corner-connector portions to form the profiled frame, with the corner-connector portions preferably consisting of angular profiled section portions that are connected together at right angles and with their inner sides are in each case connected, for example by means of rivets or welding, to the outer sides of the outer angular profiled sections (9) in an overlapping manner.

5. A container according to one of the preceding claims, **characterised in that** the side plates (7) are connected by means of rivets or screw connections to the facing legs of the outer and inner angular profiled sections (9, 11) that are associated with each other, with a plurality of rivets or screws preferably reaching through not only both angular profiled section legs, but also the side plate (7) that is held in between.

6. A container according to one of the preceding claims, **characterised in that** one or both legs of the inner angular profiled sections (11) is/are bent outwardly in their outer end regions at a predetermined angle (α) in order to facilitate the insertion of the relevant side plate (7) during assembly.

7. A container according to one of the preceding claims, **characterised in that** the side plates (7) are connected to the outer and inner angular profiled sections (9, 11) substantially in a gas-tight manner, in a liquid-tight manner, in particular in a water-tight manner, or in a manner that is tight with regard to a foaming medium which is viscous during a foaming process.

8. A container according to one of the preceding claims, **characterised in that** the side plates (7) consist of plastics material.

9. A container according to one of the preceding claims, **characterised in that** the outer and inner angular profiled sections (9, 11) consist of metal, preferably steel or aluminium.

10. A container according to one of claims 3 to 9, **characterised in that** container feet or container rollers (13, 15) and/or articulated portions for holding a container door or flap are arranged on the profiled frame.

11. A container according to one of the preceding claims, **characterised in that** a trough that is open on one side is arranged in the container (1), and **in that** the intermediate space between the outer walls of the trough and the inner walls of the body (3) is filled completely or partly with a medium, preferably an insulating foam.

12. A container according to one of the previous claims, **characterised in that** the double profiled section is formed by a welded, riveted, screwed or glued connection between the outer angular profiled section (9) and the associated inner angular profiled section (11).

13. A container according to one of the previous claims, **characterised in that** the legs of the inner angular profiled section (11) have a sealing lip that is directed in the direction of the legs of the associated outer angular profiled section (9).

## Revendications

1. Conteneur, en particulier conteneur isolant,
a) avec un corps (3) ayant au moins cinq parois latérales (5) sensiblement perpendiculaires les uns aux autres,
b) dans lequel chaque paroi latérale (5) comprend une plaque latérale (7) sensiblement rectangulaire, qui est raccordée au moyen, respectivement, d'une cornière externe (9) et d'une cornière interne (11) affectée à cette cornière externe (9) à chacune des plaques latérales (7) des parois latérales adjacentes (5), et
c) dans lequel chaque cornière externe (9) s'applique par les faces internes sur les faces externes des plaques latérales (7) à raccorder et la cornière interne (11) respectivement affectée s'applique par ses faces externes sur les faces internes des plaques latérales (7) à raccorder,
**caractérisé en ce que**,
d) pour au moins une paroi latérale, la cornière externe (9) de cette dernière est raccordée à demeure à sa cornière interne correspondante (11) dans une zone de gorge pour former un profilé double, dans lequel les branches de la cornière interne (11) du profilé double sont conformées pour étancher de manière élastique dans la direction des branches de la cornière externe (9) correspondante pour assurer l'étanchéité.

2. Conteneur selon la revendication 1, **caractérisé en ce que** les quatre cornières externes (9) sont raccordées sur au moins un côté du conteneur (1), de préférence sur deux côtés situés l'un en face de l'autre, dans les zones de coin pour former un châssis en profilé.

3. Conteneur selon la revendication 2, **caractérisé en ce que** les zones de coin de chaque cornière externe (9) du châssis en profilé sont coudées vers l'extérieur au moins sur la largeur de la cornière externe (9) située verticalement par rapport au châssis en profilé pour permettre sa réception dans cette zone de coin.

4. Conteneur selon la revendication 2, **caractérisé en ce que** les quatre cornières externes (9) sont raccordées dans les zones de coin au moyen de parties de raccord d'angle pour former le châssis en profilé, dans lequel les parties de raccord d'angle sont constituées de préférence de parties de cornière raccordées perpendiculairement les unes aux autres, dont les faces internes sont respectivement jointes aux faces externes des cornières externes (9) de manière à se chevaucher, par exemple par rivetage ou par soudage.

5. Conteneur selon l'une quelconque des revendications précédentes, **caractérisé en ce que** les plaques latérales (7) sont raccordées par rivetage ou vissage aux branches, tournées l'une vers l'autre, des cornières externes et internes (9, 11) affectées l'une à l'autre, dans lequel plusieurs rivets ou vis, passent de préférence, à la fois à travers les deux branches de cornière et à travers la plaque latérale (7) maintenue entre elles.

6. Conteneur selon l'une quelconque des revendications précédentes, **caractérisé en ce qu'**une ou les deux branches des cornières internes (11) est/sont recourbée(s) vers l'extérieur dans ses ou leurs zones terminales externes selon un angle prédéterminé (α) pour faciliter l'insertion de la plaque latérale concernée (7) au cours du montage.

7. Conteneur selon l'une quelconque des revendications précédentes, **caractérisé en ce que** les plaques latérales (7) sont raccordées aux cornières externes et internes (9, 11) de manière sensiblement étanche aux gaz, étanche aux liquides, en particulier étanche à l'eau, ou de manière étanche par rapport à un milieu moussant visqueux pendant un processus de formation de mousse.

8. Conteneur selon l'une quelconque des revendications précédentes, **caractérisé en ce que** les plaques latérales (7) sont constituées d'un matériau synthétique.

9. Conteneur selon l'une quelconque des revendications précédentes, **caractérisé en ce que** les cornières externes et internes (9, 11) sont constituées d'un métal, de préférence d'acier ou d'aluminium.

10. Conteneur selon l'une quelconque des revendications 3 à 9, **caractérisé en ce que** l'on agence sur le châssis en profilé des pieds ou des roulettes de conteneur (13, 15) et/ou des pièces articulées pour tenir une porte ou un abattant de conteneur.

11. Conteneur selon l'une quelconque des revendications précédentes, **caractérisé en ce qu'**une cuve ouverte d'un côté est agencée dans le conteneur (1) et **en ce que** l'espace intermédiaire entre les parois externes de la cuve et les parois internes du corps (3) sont remplies entièrement ou partiellement d'un milieu, de préférence une mousse isolante.

12. Conteneur selon l'une quelconque des revendications précédentes, **caractérisé en ce que** le profilé double est formé par un raccordement par soudage, rivetage, vissage ou collage entre la cornière externe (9) et la cornière interne correspondante (11).

13. Conteneur selon l'une quelconque des revendications précédentes, **caractérisé en ce que** les branches de la cornière interne (11) présentent une lèvre d'étanchéité dirigée dans la direction des branches de la cornière externe correspondante (9).
